(19) Europäisches Patentamt
European Patent Office
Office européen des brevets

(11) **EP 1 319 264 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(21) Anmeldenummer: **01969281.3**

(22) Anmeldetag: **08.09.2001**

(51) Int Cl.:
*H02H 7/085* (2006.01)    *B60J 5/06* (2006.01)
*E05F 15/00* (2006.01)

(86) Internationale Anmeldenummer:
**PCT/DE2001/003450**

(87) Internationale Veröffentlichungsnummer:
**WO 2002/023691 (21.03.2002 Gazette 2002/12)**

(54) **VERFAHREN ZUR BERÜCKSICHTIGUNG DER FAHRZEUGNEIGUNG BEI BETÄTIGUNG VON SCHLIESSTEILSYSTEMEN AN KRAFTAHRZEUGEN**

METHOD FOR MAKING ALLOWANCE FOR THE VEHICLE ATTITUDE ON OPERATING CLOSING PIECE SYSTEMS ON MOTOR VEHICLES

PROCEDE DE PRISE EN CONSIDERATION DE L'INCLINAISON D'UN VEHICULE LORS DE L'ACTIONNEMENT DE SOUS-SYSTEMES DE FERMETURE EQUIPANT DES VEHICULES AUTOMOBILES

(84) Benannte Vertragsstaaten:
**DE ES FR GB IT**

(30) Priorität: **14.09.2000 DE 10045341**

(43) Veröffentlichungstag der Anmeldung:
**18.06.2003 Patentblatt 2003/25**

(73) Patentinhaber: **ROBERT BOSCH GMBH**
**70442 Stuttgart (DE)**

(72) Erfinder:
• **DALAKURAS, Lambros**
**75217 Birkenfeld (DE)**
• **BREUNIG, Volker**
**71254 Ditzingen (DE)**
• **SCHMIDT, Frank**
**71229 Leonberg (DE)**

(56) Entgegenhaltungen:
**US-A- 5 069 000    US-A- 6 064 165**

EP 1 319 264 B1

## Beschreibung

Technisches Gebiet

Die benötigte Antriebskraft zum Öffnen und Schließen von elektrisch oder hydraulisch betriebenen Schließteilsystemen an Kraftfahrzeugen ist aufgrund der Eigenmasse der Schließteilkomponenten abhängig von der Fahrzeugneigung. Als Schließteilsystem an Kraftfahrzeugen seien genannt: Schiebetüren, Dachteilsysteme, Heckklappen etc. Bei einem in einer Neigeposition befindlichen Fahrzeug können an den Aufhängungspunkten der Schließteilsysteme erhöhte Reibungskräfte auftreten, die die zum Bewegen des Schließteilsystemes benötigte Antriebskraft zusätzlich beeinflußen. Bei Schiebetüren, die bei einem in geneigter Lage befindlichen Kraftfahrzeug betätigt werden, ist dieser Effekt aufgrund der hohen Eigenmasse der Schiebetüren besonders ausgeprägt.

Stand der Technik

Bei den derzeit bekannten Steuerungen/Regelungen für Schließteilsysteme an Kraftfahrzeugen, die hydraulisch oder elektrisch betätigbar sind, wird die Fahrzeugneigung zur Ermittlung der Antriebskräfte über die Stellmotoren nicht berücksichtigt. Berücksichtigte Größen sind bisher lediglich die Batteriespannungsschwankungen sowie Schwankungen der Außentemperatur, denen im Rahmen einer Stellgrößenkompensation an den Stellantrieben Rechnung getragen wird. Bei Steuerungen von Schließteilsystemen ohne passiven Ein

klemmschutz wirkt sich eine Störgrößenkompensation direkt auf die Regelgröße beispielsweise die Antriebsdrehzahl aus. Die Anordnung von Steuerungen ohne passiven Einklemmschutz ist nur dann sinnvoll, wenn die Stellgröße kontinuierlich verändert werden kann. In der Regel wird als Führungsgröße die Solldrehzahl vorgegeben. Unter Berücksichtigung der Störgrößen wie beispielsweise Batteriespannungsschwanken und Außentemperaturschwankungen wird die Störgröße berechnet. Am Ausgang einer solchen Steuerung stellt sich dann die Regelgröße in Gestalt der Drehzahl ein. Bei Regelungen ohne passiven Einklemmschutz ist eine Störgrößenkompensation nicht notwendig, da der Störgrößeneinfluß vom Regler selbst ausgeregelt wird. Bei solchen Systemen wird in der Regel die Führungsgröße Solldrehzahl vorgegeben. Die Regelgröße wird über eine Sensoreinheit erfaßt und auf den Regler zurückgekoppelt, so daß die Störgröße beispielsweise eine pulsweitem modullierte Spannung lediglich aus der ermittelten Regeldifferenz bestimmt wird. Am Ausgang einer solchen Regelstrecke stellt sich dann die Regelgröße in Gestalt einer Ist-Drehzahl ein.

Bei Systemen seien es Regelungen oder Steuerungen mit passivem Einklemmschutz wird davon ausgegangen, daß die Stellgröße nicht kontinuierlich verändert werden kann. Der Stellantrieb des Schließteilsystemes kann also entweder nur ein- oder nur ausgeschaltet werden. Schwankungen der Batteriespannung oder der Temperatur wirken sich direkt auf die Drehzahl aus. Solche Systeme lassen sich beispielsweise zur Ansteuerung elektrischer Fensterheber in Kraftfahrzeugen einsetzen. Beim passiven Einklemmschutz wird die Regelgröße oder ein von ihr abgeleitetes Signal mit einem Referenzsignal verglichen. Eine Auswerteeinheit wertet die Abweichungen von Regelgröße und Referenzsignal zeitlich aus und entscheidet, ob ein Einklemmfall vorliegt oder nicht. Das Referenzsignal wird aus einem Speicher ausgelesen, auf welchen die Auswerteeinheit jeder Zeit zugreifen kann, unter Berücksichtigung der aktuellen Störgrößen bestimmt. Aktuelle Störgrößen bei einem solcherart beschaffenen System können beispielsweise Batteriespannungsschwankungen oder Temperaturschwankungen sein.

Bei Steuerungen mit adaptiven passiven Einklemmschutz wird die Zuverlässigkeit des Einklemmschutzes maßgeblich vom Referenzsignal bestimmt. Daher wird bei einigen Systemen während des Betriebes die im Speicher abgelegte Referenz an die veränderten Umgebungsbedingungen z.B. Alterung und Verschleiß adaptiert. Eine solche Steuerung ist mit der vorhin diskutierten Steuerung weitestgehend identisch bis auf die die Adaption der im Speicher dauerhaft gespeicherten Referenzsignale, deren zeitliche Änderung mittels der Adaption berücksichtigt werden kann.

Bei adaptiven Regelungen ohne passiven Einklemmschutz ist eine Störgrößenkompensation nicht notwendig, da der Störgrößeneinfluß vom Regler ausgeregelt wird. Die Regelgröße wird über eine Sensoreinheit erfaßt und auf den Regler zurückgekoppelt. In Verbindung mit einer Überwachung oder einer Adaption der Regelstrecke ist es jedoch sinnvoll, den Einfluß der Stellgrößen bei der Auswertung mit einzubeziehen. Bei diesen Systemen wird das Regelverhalten an die sich ändernden Umgebungsbedingungen adaptiert. Die sich ändernden Umgebungsbedingungen wie z.B. Temperaturschwankungen oder Batteriespannungsschwankungen werden nun nicht mehr im Rahmen der Ermittlung des Referenzsignales ermittelt, sondern finden direkt Eingang in den Adaptionsbaustein. Bei Regelsystemen mit adaptiven passiven Einklemmschutz werden entsprechend zu den Steuerungen mit passiven Einklemmschutz Vergleiche mit in einem Speicher dauerhaft abgelegten Referenzsignalen durchgeführt. Bei adaptiven Systemen wird wie bei der Steuerung mit adaptiven passiven Einklemmnschutz, das Referenzsignal ebenfalls sich ändernden Umgebungsbedingungen unterworfen, d.h. sich ändernde Umgebungsbedingungen beeinflußen die im Speicher dauerhaft abgelegten Werte der Referenzsignale auf welche die Auswerteelektronik zugreift.

Aus US 5,069,000 A ist eine Rückfahreinrichtung für angetriebene Fahrzeugtürsysteme bekannt, bei denen der Einklemmfall mittels eines Vergleichs zwischen einer aktuellen Stromaufnahme und einer vorher gespeicherten Referenzkennlinie erkannt wird. Aktualisierungen der Referenzkennlinien ermöglichen eine Anpassung auf veränderliche Umgebungsbedingungen und berücksichtigen den Neigungswinkel des Kraftfahrzeugs implizit.

Darstellung der Erfindung

Mit dem in Anspruch 1 erfindungsgemäß vorgeschlagenen Verfahren zur Berücksichtigung der Fahrzeugneigung beim Betätigen von Schließelementen an Kraftfahrzeugen, sei es über hydraulische oder elektromotorische Stellantriebe, ist es möglich, bei Steuerungen mit passivem Einklemmschutz die Antriebskraftänderung bei geneigtem Fahrzeug zu kompensieren bzw. sich einstellende Kraftänderungen zu überwachen. Die Zuverlässigkeit von Antriebssystemen mit passiven Einklemmschutz kann durch die Berücksichtigung der sich einstellenden Fahrzeugneigung nachhaltig erhöht werden. Insbesondere bei der Betätigung von eine große Eigenmasse aufweisenden Schiebetüren an einem in geneigter Position befindlichen Kraftfahrzeug können die zum Betätigen der Schiebetüren im geneigten Zustand benötigten Schließkräfte wesentlich besser bestimmt werden. Es ist in jedem Falle sicherzustellen, daß auch im geneigten Zustand der Einklemmschutz gewährleistet bleibt, so daß sichergestellt ist, daß bei einer in geneigten Fahrzeuglage mit erhöhte Schließkraft zu betätigende Schiebetüre nicht den passiven Einklemmschutz überregelt. Mit dem erfindungsgemäß vorgeschlagenen Verfahren kann unter Berücksichtigung der sich einstellenden Fahrzeugneigung die Empfindlichkeit von Systemen mit passivem Einklemmschutz signifikant erhöht werden.

Ferner läßt sich mit dem erfindungsgemäß vorgeschlagenen Verfahren zur Berücksichtigung der Fahrzeugneigung bei der fremdkraftbetätigten Betätigung von Schließteilsystemen an Kraftfahrzeugen ein wesentlich höherer Komfort erzielen sowie eine erhöhte Zuverlässigkeit dieser Schließteilkomponenten herbeiführen. Die Adaption der abhängig von der Fahrzeugneigung und abhängig von den durch die Eigenmasse der Schließteilkomponenten verursachten, sich mit der Fahrzeugneigung ändernden Reibungskräfte kann durch ein separat vorzusehenden Neigungssensor detektiert werden. Im erfindungsgemäß vorgeschlagenen Verfahren ist jedoch ein beispielsweise schon im Zusammenhang mit einer Diebstahlwarnanlage oder einem Rückhaltesystem im Fahrzeug vorgesehener Neigungssensor in den Datenübertragungsbus, wie er heute in vielen modernen Kraftfahrzeug bereits usus ist, integriert, so daß kein zusätzlicher Verkabelungs- bzw. Verdrahtungsaufwand mehr zu betreiben ist, sondern ein bereits vorhandener für andere Systeme vorgesehener Neigungssensor mit einer zusätzlichen Funktion zur Neigungsdetektion herangezogen wird.

Zeichnung

Anhand der Zeichnung wird die Erfindung nachstehend näher erläutert.
Es zeigt:

Figur 1     eine Steuerung einer Schließteilkomponente an einem Kraftfahrzeug mittels Stellantrieb mit durch Adaption überwachtem passivem Einklemmschutz,

Figur 2     eine adaptive Regelung eines Stellantriebes einer Schließteilkomponente ohne passiven Einklemmschutz,

Figur 3     eine Regelung des Stellantriebes einer fremdkraftbetätigten Schließteilfläche mit adaptivem passivem Einklemmschutz,

Figur 4     eine erfindungsgemäße Steuerungsanordnung für eine Fremdkraft betätigte Steuerung einer Schließteilkomponente mit über einen Datenbus verbundenen Steuergeräten zweier unterschiedlicher Überwachungssysteme und

Figur 5     eine Regelstrecke zur Berücksichtigung der Neigungswinkelinformationen eines Neigungswinkeldetektors an einem Stellantrieb mit passivem Einklemmschutz an einem Kraftfahrzeug.

Ausführungsvarianten

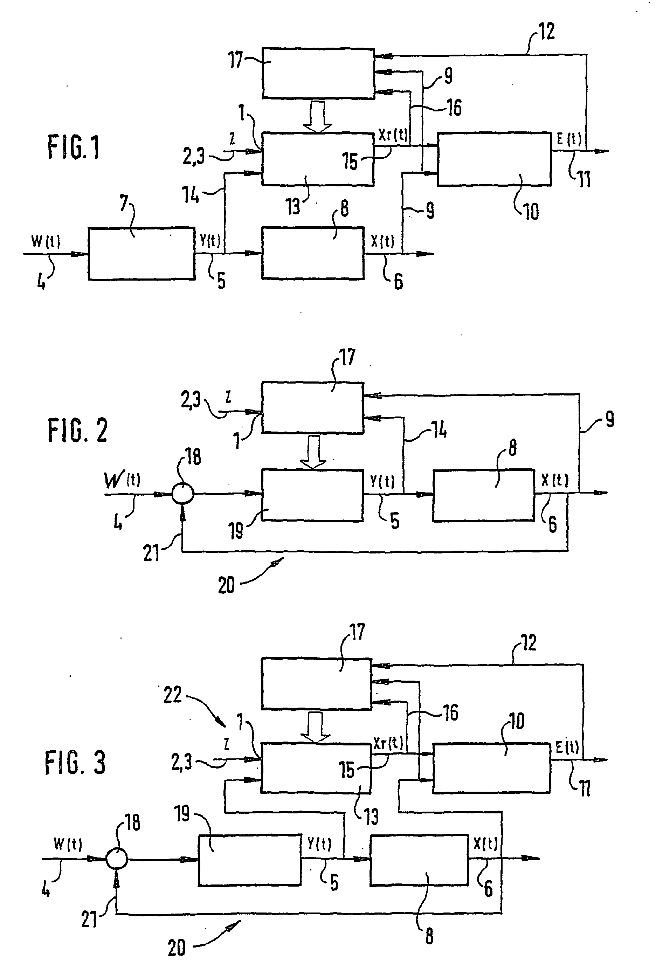

Bei dieser aus dem Stand der Technik bekannten Steuerungskonfiguration hängt die Zuverlässigkeit der Einklemmsituationsdetektion maßgeblich von der Güte des Referenzsignales $X_r(t)$ ab. Die aus dem Stand der Technik bereits bekannte Lösung gemäß Figur 1 enthält eine Steuerung 7, der eine Führungsgröße 4 W(t) aufgegeben ist. Die Steuerung ermittelt aus der aufgegebenen Führungsgröße 4 eine Stellgröße 5 Y(t). Die Stellgröße wird einem dem Steuerungsbaustein 7 nachgeschalteten elektrischen oder hydraulisch arbeitenden Stellantrieb 8 aufgegeben. An dessen Ausgang stellt sich die Drehzahl 6 (X)t ein. Gemäß der Konfiguration aus Figur 1 wird bei Bezugszeichen 14 die Stellgröße 5 abgegriffen und einem Referenzspeicher zugeleitet. Neben der eingangsseitig am Referenzspeicher 13 anstehenden Stellgröße 5 über den Abgriff 14 stehen an dessen Stellgrößen Eingang 1 desweiteren die Störgrößen Batteriespannung $U_{batt}$ sowie Temperatur an.

Ausgangsseitig des Stellantriebes 8 wird die Ist-Drehzahl des Stellantriebes 8 über den Abgriff 9 einer Auswerteschaltung zur Erkennung einer Einklemmsituation 10 zugeführt. Deren Ausgangssignal 11 wird über eine Signalrückführung 12 an einer Adaption zurückgeleitet; das ausgangsseitig des Stellantriebes 8 abgegriffene Signal der Ist-Drehzahl des Stellantriebes wird über den Abgriff 9 ebenfalls der Adaption 17 zugeleitet und das ausgangsseitig am Referenzspeicher 13 erzeugte Referenzsignal 15 $X_r(t)$ wird über den Referenzsignalabgriff 16 ebenfalls an die Adaption geleitet.

Das im Referenzspeicher 13 dauerhaft gespeicherte Referenzsignal 15 wird nun einerseits durch die dem Referenzspeicher 13 aufgeschalteten Störgrößen 2 und 3 beeinflußt und andererseits mittels der im Referenzspeicher 13 übergeordneten Adaption 17 an die veränderten Umgebungsbedingungen z.B. Alterungen oder Verschleiß der Bauteile angepaßt.

Aus der in Figur 2 wiedergegebenen Konfiguration geht eine adaptive Regelung ohne passiven Einklemmschutz eines Stellantriebes 8 hervor.

Im Gegensatz zu der in Figur 1 dargestellten Konfiguration liegen die Störgrößen 2 und 3, die Batteriespannungsschwankungen repräsentierend sowie Temperaturschwankungen repräsentierend eingangsseitig an der Adaption 17 direkt an. Die Adaption 17 ist darüber hinaus über einen Regelgrößenabgriff 9 mit der Regelgröße 6 beaufschlagt, die ausgangsseitig des Stellantriebes 8 ansteht. Ferner ist die Adaption über einen Stellgrößenabgriff 14 mit der Stellgröße 5 Y(t) des Reglers 19 beaufschlagt.

Das eingangsseitig des Reglers zugeführt Führungsgrößensignal 4 W(t) wird auf einen Summationspunkt 18 gegeben, dem in gleicher Weise ein über eine Regelstrecke 20 zurückgeführtes Signal, die Regelgröße 6 X(t) repräsentierend zugeführt wird, mit einem negativen Vorzeichen behaftet.

Bei geregelten Systemen gemäß der Konfiguration aus Figur 2 ist eine Steilgrößenkompensation nicht erforderlich, da der Stellgrößeneinfluß der Stellgrößen 2, 3 direkt vom Regler 19 ausgeregelt wird. In Verbindung mit einer Überwachung oder einem adaptiven Baustein 17 ist es jedoch sinnvoll, den Einfluß der Stellgrößen bei der Auswertung mit einzubeziehen. Daher wird bei diesen Systemen des Regelverhalten an die sich ändernden Umgebungsbedingungen adaptiv angepaßt.

Aus der Darstellung gemäß Figur 3 ist eine Regelung eines Stellantriebes mit adaptiv überwachtem passivem Einklemmschutzdetektion bekannt. Entsprechend zu den Steuerungen (vergleiche Figur 1) mit passivem Einklemmschutz wird bei geregelten Systemen mit passivem Einklemmschutz 10 ein Vergleich mit einem Referenzsignal $X_r(t)$ 15 durchgeführt. Auch bei dieser Konfiguration unterliegt das im Referenzsignalspeicher 13 abgelegte Referenzsignal $X_r(t)$, gekennzeichnet durch Bezugszeichen 15 einer Anpassung an veränderte Umgebungsbedingungen wie sie beispielsweise durch die Störgrößen 2, 3, wie sie Batteriespannungsschwankungen sowie Temperaturschwankungen darstellen, auftreten können.

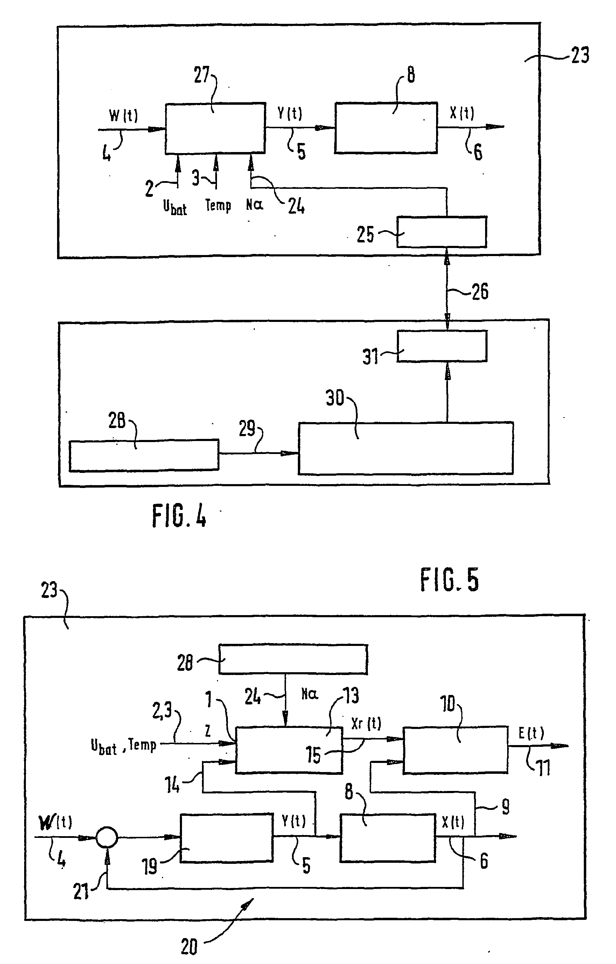

Aus der Darstellung gemäß Figur 4 gehen zwei erfindungsgemäß über einen internen Datenbus miteinander verbundene Steuergeräte zweier unterschiedlicher im Kraftfahrzeug vorhandener Überwachungssysteme näher hervor.

Einem Steuerungsbaustein 27 ist eingangsseitig die Führungsgröße 4W(t) aufgegeben. Ferner liegen eingangsseitig am Steuerungsbaustein 27 die Störgrößen 2, Batteriespannungsschwankungen repräsentierend, die Störgröße Temperaturänderung, gekennzeichnet durch Bezugszeichen 3 sowie die von einem im Steuergerät 23 vorhandene Schnittstelle 25 ausgehenden Fahrzeugneigungssignal 24 $N_\alpha$ eingangsseitig am Steuerungsbaustein 27 an.

Ausgangsseitig wird am Steuerungsbaustein 27 die Stellgröße 5 Y(t) erhalten, die eingangsseitig einen hydraulisch oder elektrisch arbeitenden Stellantrieb 8 beaufschlagt. An der Ausgangsseite des Stellantriebes 8 liegt die Ist-Drehzahl X(t) auch durch Bezugszeichen 6 identifiziert an und treibt die betätigende Schließteilkomponente am Kraftfahrzeug an.

Bei der Ausführungsvariante des erfindungsgemäß vorgeschlagenen Verfahrens gemäß der Figur 4 erfolgt die Übermittlung des Fahrzeugneigungswinkelsignales 24 $N_\alpha$ über einen Fahrzeug internen Datenbus (z. B. CAN) zwischen den Interfaces 25 und 31 der beiden Steuergeräte unterschiedlicher Überwachungssysteme am Kraftfahrzeug. Bei dem mit Bezugszeichen 23 identifizierten Steuergerät einer Schließteilkomponente handelt es sich beispielsweise um ein Steuergerät zur Betätigung einer Schiebetür, während das darunter liegende mit dem Interface 25 des Steuergerätes 23 über den Datenbus 26 kommunizierende Interface 31 dasjenige einer Diebstahlüberwachungsanlage am Kraftfahrzeug sein kann. Über den internen Datenbus 26 kommunizieren die beiden mit Stellenbausteine 25 und 31 in beide Richtungen miteinander.

Der die Fahrzeugneigung detektierende Neigungssensor 28 kann dabei im Diebstahlüberwachungssystem aufgenommen sein und sendet sein Ausgangssignal 29 an einen Auswertungsbaustein, von dem aus das Neigungssignal 24 an ein Interface 31 übermittelt wird, von dem es via internen Datenbus 26 an das Interface 25 des Steuergerätes 23 für die Schließteilkomponente am Kraftfahrzeug übermittelt wird. Die Fahrzeugneigung $N_\alpha$ wird in Bezug auf die Längsachse des Fahrzeuges aufgenommen und kann durch den Neigungssensor 28 der an geeigneter Stelle am Fahrzeug angebracht ist, detektiert werden. Das Neigungssignal kann entweder von einem bereits im Fahrzeug vorhandenen Sensor 28 geliefert werden, der direkt im Schiebtürsteuergerät 23 vorgesehen werden kann oder das Signal kann von einer anderen Anwendung eines weiteren Überwachungssystemes am Kraftfahrzeug "ausgeliehen" werden.

In diesem Falle wird gemäß Figur 4 die Datenübermittlung des Neigungssignales 24 vom Ort der Detektion an den Ort der Verarbeitung im Steuergerät 23 für die Schließteilkomponente am Kraftfahrzeug übertragen.

Bei der in Figur 4 dargestellten Steuerungsvariante des erfindungsgemäß vorgeschlagenen Verfahrens wird von einer Steuerung 27 ausgegangen, bei der die Solldrehzahl in Gestalt des Eingangssignales 4 als Führungsgröße vorgegeben wird. Der die Schließteilkomponente betätigende Antrieb 8 wird mit einer pulsweiten modulierten Spannung Y(t) die Stellgröße 5 repräsentierend angesteuert. Diese pulsweiten modulierte Spannung kann im Bereich von 0 bis 100 % variiert werden so daß sich ausgangsseitig des Stellantriebes 8 die Ist-Drehzahl X(t) einstellt.

Die Ist-Drehzahl X(t), die sich ausgangsseitig am Stellantrieb 8 einstellt, hängt von der Stellgröße Y(t) ab.

Die Berechnung der Stellgröße Y(t), identifiziert auch durch Bezugszeichen 5, erfolgt gemäß der nachfolgend wiedergegebenen Beziehung unter Verwendung geeigneter Operatoren $\varphi_n$:

$$Y(t) = \varphi_w \left\{ W(t) \right\} + \varphi_{bat} \left\{ U_{bat}(t) \right\} + \varphi_{temp} \left\{ Temp(t) \right\} + \dot{\varphi} N_\alpha \left\{ N\alpha(t) \right\}$$

$\varphi_x \{......\}$ sind hierbei geeignet zu wählende Operatoren. Der Einfluß des Neigungssignales $N_\alpha$ Bezugszeichen 24 und eine damit verbundene erhöhte bzw. erniedrigte Ausgangsdrehzahl X(t) an der Ausgangsseite des Stellantriebes 8 werden bei dieser Anordnung gemäß der Darstellung aus Figur 4 kompensiert.

Aus der Darstellung gemäß Figur 5 geht eine nicht branspruchte Regelungskonfiguration mit passivem Einklemmschutz näher hervor.

Im Gegensatz zur in Figur 4 dargestellten Steuerungsvariante wird bei der Regelungsvariante der Einfluß der Störgrößen 2, 3 und 24 ausgeregelt. Das Neigungssignal $N_\alpha$ Bezugszeichen 24, wird für die Korrektur des Referenzsignales $X_r(t)$, Bezugszeichen 15 benötigt, die im Referenzwertspeicher 13 abgelegt ist. Im einfachsten Falle kann das Referenzsignal $X_r(t)$ aus einem konstanten Schwellwert bestehen, der abhängig von den Störgrößen 2 die Batteriespannungsschwankungen repräsentierend, an Störgröße 3 Temperaturschwankungen repräsentierend sowie vom Fahrzeugneigungswinkel, $N_\alpha$ abhängig ist. Das Neigungssignal $N\alpha$, Bezugszeichen 24, wird in diesem Beispiel von einem Sensor 28 dargestellt, der unmittelbar im Steuergerät 23 für die Schließteilkomponente am Kraftfahrzeug aufgenommen sein kann.

Das im Referenzspeicher 13 abgelegte Referenzsignal $X_s$, welches ein statisches Referenzsignal darstellt, kann gemäß der nachfolgenden Beziehung störgrößenabhängig modifiziert werden:

$$X_r(t) = X_s + \varphi_{bat} \left\{ U_{bat}(t) \right\} \varphi_{temp} \left\{ Temp(t) \right\} + \varphi N_\alpha \left\{ N_\alpha(t) \right\}.$$

Statt der aus dem Stand der Technik gemäß den Figuren 3 erfolgenden Adaption der Referenzspeicher 13 durch eine Adaption 17, werden die im Referenzspeicher 13 abgelegten Signale nunmehr direkt durch die Fahrzeugneigungssignale $N_\alpha$, Bezugszeichen 24, modifiziert, die über einen im Steuergerät 23 der Schließteilkomponente geordneten Sensor 28 ermittelt werden.

Bei der gemäß in Figur 4 vorgeschlagenen Implementationsform des erfindungsgemäß vorgeschlagenen Verfahrens wird die Störgröße $N_\alpha$, die Fahrzeugneigung repräsentierend, kompensiert. Damit lassen sich verschiedene Vorteile wie beispielsweise eine genauere Bestimmung der benötigten Schließkraft zur Betätigung einer Schließteilkomponente an geneigtem Fahrzeug ermitteln. Ferner kann bei Systemen mit passivem Einklemmschutz die Empfindlichkeit wesentlich genauer eingestellt werden, so daß sich ein höherer Bedienungskomfort und eine erhöhte Zuverlässigkeit einer solcher Art betriebenen Fremdkraft betätigten Schließteilkomponente am Kraftfahrzeug einstellt.

Bezugszeichenliste

1    Störgrößeneingang
2    $U_{batt}$
3    Temperatur
4    Führungsgröße W(t)

5  Stellgröße Y(t)
6  Regelgröße X(t)
7  Steuerung
8  Stellantrieb
9  Regelgrößenabgriff
10  Auswerteschaltung EKS
11  Einklemmfallsignal
12  Signalrückführung
13  Referenzspeicher
14  Stellgrößenabgriff
15  Referenzsignal
16  Referenzsignalabgriff
17  Adaption
18  Summationspunkt
19  Regelbaustein
20  Regelstrecke
21  Regelgrößenrückführung
22  Regelung mit adaptivem passivem Einklemmschutz
23  Steuergerät
24  Neigungssignal $N_\alpha$
25  Interfacesteuergerät 23
26  Bidirektionaler Datenbus (CAN)
27  Steuerung
28  Neigungssensor
29  Sensorsignal
30  Anwendung
31  Interface von weiterem Überwachungssystem

**Patentansprüche**

1. Verfahren zur Betätigung von Schließteilsystemen mit Stellantrieben (8) an Kraftfahrzeugen, wobei die Stellantriebe (8) elektrische oder hydraulische Antriebskomponenten darstellen und die Schließteilsysteme durch Einklemmschutzerkennungsschaltungen (10) und adaptive Bausteine (17) überwacht werden, wobei an diesen Störgrößen (2, 3) anliegen, **dadurch gekennzeichnet, daß** an eine Steuerung (27) für eine Ermittlung einer Stellgröße Y(t) (5) ein Fahrzeugneigungssignal $N_\alpha$ (24) aufgeschaltet wird, wobei das Fahrzeugneigungssignal $N_\alpha$ (24) von einem bereits vorhandenen Neigungssensor (28) eines anderen Überwachungssystems im Fahrzeug mittels eines Datenbusses (26) übermittelt wird.

2. Verfahren gemäß Anspruch 1, **dadurch gekennzeichnet, daß** die Stellgröße Y(t) (5) der Steuerung (27) um das Neigungssignal (24) $N_\alpha$ des Neigungssensors (28) kompensiert ist.

**Claims**

1. Method for activating closing part systems with actuator drives (8) in motor vehicles, wherein the actuator drives (8) constitute electric or hydraulic drive components and the closing part systems are monitored by anti-trapping detection circuits (10) and adaptive modules (17), wherein fault variables (2, 3) are present at said modules (17), **characterized in that** a vehicle attitude signal $N_\alpha$ (24) is connected to a controller (27) for determining a manipulated variable Y(t) (5), wherein the vehicle attitude signal $N_\alpha$ (24) is transmitted from an already present attitude sensor (28) of another monitoring system in the vehicle by means of a databus (26).

2. Method according to Claim 1, **characterized in that** the manipulated variable Y(t) (5) of the controller (27) is compensated by an amount equal to the attitude signal (24) $N_\alpha$ of the attitude sensor (28).

**Revendications**

1.  Procédé d'actionnement de systèmes partiels de fermeture à l'aide d'entraînements (8) d'actionnement sur véhicules automobiles, les entraînements d'actionnement (8) formant des composants d'entraînement électriques ou hydrauliques et les systèmes partiels de fermeture étant surveillés par des circuits (10) de détection de la protection d'enclenchement et par des modules adaptatifs (17) sur lesquels des grandeurs perturbatrices (2, 3) sont appliquées, **caractérisé en ce que**
    un signal $N_\alpha$ (24) d'inclinaison du véhicule est appliqué sur une commande (27) pour déterminer une grandeur de réglage Y(t) (5), le signal $N_\alpha$ (24) de pente du véhicule étant transmis au moyen d'un bus de données (26) par un détecteur d'inclinaison (28) déjà existant d'un autre système de surveillance prévu dans le véhicule.

2.  Procédé selon la revendication 1, **caractérisé en ce que** la grandeur de réglage Y(t) (5) de la commande (27) est compensée par le signal d'inclinaison (24) $N_\alpha$ du détecteur d'inclinaison (28).

FIG.1

FIG. 2

FIG. 3

W(t)
4

27

2 3 24
U_bat Temp Nα

Y(t)
5

8

X(t)
6

25

26

31

28

29

30

23

**FIG. 4**

**FIG. 5**

23

28

24 Nα 13

2,3
U_bat, Temp
Z

1

10

E(t)
11

15

Xr(t)

14

8

9

W(t)
4

21

19

Y(t)
5

X(t)
6

20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5069000 A